(19) **Europäisches Patentamt European Patent Office Office européen des brevets**

(11) **EP 1 996 437 B1**

(12) **FASCICULE DE BREVET EUROPEEN**

(45) Date de publication et mention de la délivrance du brevet:
**16.09.2009 Bulletin 2009/38**

(21) Numéro de dépôt: **06842019.9**

(22) Date de dépôt: **21.11.2006**

(51) Int Cl.:
***B60T 8/172*** *(2006.01)*

(86) Numéro de dépôt international:
**PCT/FR2006/051208**

(87) Numéro de publication internationale:
**WO 2007/090940 (16.08.2007 Gazette 2007/33)**

(54) **PROCEDE POUR ESTIMER LA DERIVEE DU GLISSEMENT DES ROUES D'UN VEHICULE AUTOMOBILE ET UNITE DE CALCUL POUR EFFECTUER CETTE ESTIMATION**

VERFAHREN ZUM SCHÄTZEN DER ABLEITUNG EINES KRAFTFAHRZEUGRADSCHLUPFES UND RECHENEINHEIT ZUR DURCHFÜHRUNG DER SCHÄTZUNG

METHOD FOR ESTIMATING THE DERIVATIVE OF A MOTOR VEHICLE WHEEL SLIPPAGE AND COMPUTING UNIT FOR PERFORMING SAID ESTIMATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2006 FR 0601070**

(43) Date de publication de la demande:
**03.12.2008 Bulletin 2008/49**

(73) Titulaire: **RENAULT S.A.S.**
**92100 Boulogne Billancourt (FR)**

(72) Inventeurs:
• **CLAEYS, Xavier**
**F-78000 Versailles (FR)**

• **MARSILIA, Marco**
**F-92130 Issy-Les-Moulineaux (FR)**

(74) Mandataire: **Guyon, Rodolphe C.**
**Renault s.a.s.**
**Service 0267**
**TCR GRA 236**
**1, Avenue du Golf**
**F-78288 Guyancourt Cedex (FR)**

(56) Documents cités:
**US-A- 5 771 479      US-A1- 2005 234 628**

**Description**

La présente invention concerne un procédé pour estimer la dérivée du glissement des roues d'un véhicule automobile équipé de deux ou quatre roues motrices et pour calculer la vitesse du véhicule.

L'invention vise également une unité de calcul destinée à être embarquée dans un véhicule automobile pour mettre en oeuvre le procédé précité notamment pour la logique d'activation du dispositif d'anti-blocage des freins et/ou d'anti-patinage des roues.

Les constructeurs d'automobiles réalisent actuellement de nombreuses études sur l'intégration de systèmes actifs sur les véhicules, pour améliorer le comportement des véhicules et par conséquent la sécurité du conducteur.

Pour estimer avec précision la dérivée du glissement d'une roue, il est nécessaire de disposer pour chaque roue du véhicule, d'un capteur de la vitesse de la roue, d'une estimation ou d'un capteur de couple moteur appliqué sur la transmission du véhicule, d'une estimation ou d'un capteur de couple ou de pression de freinage appliqué à la roue, d'une estimation du rapport ou état des embrayages si le couple moteur est appliqué à la roue au travers une boîte de vitesses.

Cette estimation précise du glissement de l'accélération est très utile dans le cadre de la réalisation d'un système de contrôle de la motricité ou de la traction d'un véhicule ou de freinage ABS.

La plupart des procédés connus dont le but est de prévenir ou corriger le glissement intempestif des roues du véhicule utilisent l'accélération de la roue et non l'accélération du glissement en dérivant la vitesse des roues du véhicule (ex : JP59109450 et FR2415030). L'information obtenue n'est pas exactement caractéristique de l'état de la roue par rapport au sol même si elle est pertinente pour réaliser des contrôles de stabilité ou motricité.

D'autres techniques permettent d'obtenir l'accélération du glissement des roues en utilisant un procédé de calcul de la vitesse de référence plus ou moins complexe (voir par exemple l'US5046787) en complément de l'obtention de l'accélération de la roue par dérivation. L'information obtenue dans ce contexte n'est pas parfaitement représentative de l'accélération du glissement car la vitesse de référence n'est pas exacte puisqu'elle subit divers traitements qui la déphasent ou elle est basée dans le cas d'un véhicule à deux roues motrices, sur une information de la vitesse des roues motrices.

Un procédé d'estimation de l'état de la roue d'un véhicule automobile et une unité de calcul pour mettre en oeuvre cette estimation selon les préambules des revendications 1 et 6 sont connues du document US 2 005 234 628.

La demanderesse a par ailleurs proposé une méthode d'estimation de l'état de la roue basée sur un observateur d'état. Cet observateur estime une perturbation qui n'est autre que la dérivée du glissement de la roue. L'inconvénient de la méthode est de ne pas dissocier correctement les phénomènes entre les roues droites et gauches. De plus, l'estimation par filtrage produit un déphasage de l'indicateur.

Le but de la présente invention est de fournir un procédé qui permet d'enrichir l'information sur l'accélération des roues afin de connaître l'accélération du glissement de chaque roue sans pour autant faire d'approximation quant à la vitesse de référence de cette roue.

Suivant l'invention, le procédé pour estimer la dérivée du glissement des roues d'un véhicule automobile équipé de deux ou quatre roues motrices et d'une unité de calcul pour mettre en oeuvre ce procédé est caractérisé par les étapes suivantes :

a) la saisie de données sur la vitesse des roues, des couples moteurs appliqués sur les roues, des pressions de freinage, du rapport de boîte de vitesses engagé,

b) l'estimation de l'accélération de chaque roue en effectuant une dérivation discrète et un filtrage de la vitesse de chaque roue,

c) l'estimation du couple appliqué à chaque roue en tenant compte, de la pression de freinage, du rapport de boîte de vitesses engagé et de l'état de l'embrayage,

d) l'estimation de l'inertie des roues pour chacun des essieux avant et arrière du véhicule,

e) la mise en oeuvre d'une transformation géométrique de l'estimation de l'accélération de chaque roue estimée en b),

f) l'estimation de la dérivée du glissement de chaque roue, à partir des valeurs estimées en c), d) et e).

Un tel procédé permet ainsi d'effectuer une estimation précise du glissement de chaque roue d'un véhicule.

De préférence, l'estimation du couple appliqué Cm sur chaque roue est effectuée à l'aide de la relation suivante :

$$Cm = \frac{1}{2} \, CL \ status \times Tm$$

CL status étant le rapport de démultiplication du rapport de boîte de vitesses engagé, ce rapport étant égal à 0, lorsque l'embrayage est ouvert et Tm est le régime du moteur, et en ce que l'estimation du couple de freinage Cf appliqué sur chaque roue est effectuée à l'aide de la relation suivante :

$$Cf = \text{Efficacité} \times Pr$$

$Pr$ étant la pression de freinage appliquée sur la roue.

De préférence également, l'estimation de l'inertie de chaque essieu est effectuée à l'aide des relations suivantes :

$$J = \frac{J_{pont} + CL\,status^2.J_{mot}}{2}$$

$J_{pont}$ étant l'inertie du pont plus l'inertie de la roue et $J_{mot}$ l'inertie du moteur et CL status le rapport de démultiplication du rapport de boîte de vitesses engagé, ce rapport étant égal à 0 lorsque l'embrayage est ouvert.

De préférence également, la transformation géométrique selon l'étape e) est effectuée à l'aide des équations suivantes, pour les quatre roues du véhicule :

$$\begin{cases} (J_{11} + M \cdot r^2)\dfrac{\delta\omega_{11}}{\delta t} - \dfrac{\delta Sx_{11}}{\delta t} \cdot M \cdot r + \sum_{ij \neq 11} J_{ij} \cdot \dfrac{\delta\omega_{ij}}{\delta t} = \sum_{i,j}(Cm_{ij} - Cf_{ij}) \\[4mm] (J_{12} + M \cdot r^2)\dfrac{\delta\omega_{12}}{\delta t} - \dfrac{\delta Sx_{12}}{\delta t} \cdot M \cdot r + \sum_{ij \neq 12} J_{ij} \cdot \dfrac{\delta\omega_{ij}}{\delta t} = \sum_{i,j}(Cm_{ij} - Cf_{ij}) \\[4mm] (J_{21} + M \cdot r^2)\dfrac{\delta\omega_{21}}{\delta t} - \dfrac{\delta Sx_{21}}{\delta t} \cdot M \cdot r + \sum_{ij \neq 21} J_{ij} \cdot \dfrac{\delta\omega_{ij}}{\delta t} = \sum_{i,j}(Cm_{ij} - Cf_{ij}) \\[4mm] (J_{22} + M \cdot r^2)\dfrac{\delta\omega_{22}}{\delta t} - \dfrac{\delta Sx_{22}}{\delta t} \cdot M \cdot r + \sum_{ij \neq 22} J_{ij} \cdot \dfrac{\delta\omega_{ij}}{\delta t} = \sum_{i,j}(Cm_{ij} - Cf_{ij}) \end{cases}$$

Les indices 11 et 12 désignent respectivement la roue avant droite et la roue avant gauche et les indices 21. et 22 la roue arrière droite et la roue arrière gauche,

Sx11, Sx12, Sx21, Sx22 désignent le glissement des roues qui est égal à : $Sx_{ij} = r\omega_{ij} - V$ (avec $ij$ = 11, 12, 21, 22) $r$ étant le rayon de la roue, wij la vitesse de la roue et $V$ la vitesse du véhicule et, $M$ la masse du véhicule et $t$ le temps.

Par ailleurs, la dérivée du glissement de chacune des quatre roues du véhicule est de préférence calculée à l'aide des équations suivantes :

$$\begin{cases}
\dfrac{\delta Sx_{11}}{\delta t} = \left[(J_{11} + M \cdot r^2)\dfrac{\delta\omega_{11}}{\delta t} + \sum_{ij \neq 11} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{12}}{\delta t} = \left[(J_{12} + M \cdot r^2)\dfrac{\delta\omega_{12}}{\delta t} + \sum_{ij \neq 12} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{21}}{\delta t} = \left[(J_{21} + M \cdot r^2)\dfrac{\delta\omega_{21}}{\delta t} + \sum_{ij \neq 21} J_{ij} \cdot \dfrac{\delta\omega_{ij}}{\delta t} - \sum_{i,j}(Cm_{ij} - Cf_{ij})\right]\dfrac{1}{M \cdot r} \\[3mm]
\dfrac{\delta Sx_{22}}{\delta t} = \left[(J_{22} + M \cdot r^2)\dfrac{\delta\omega_{22}}{\delta t} + \sum_{ij \neq 22} J_{ij} \cdot \dfrac{\delta\omega_{ij}}{\delta t} - \sum_{i,j}(Cm_{ij} - Cf_{ij})\right]\dfrac{1}{M \cdot r}
\end{cases}$$

L'invention concerne également une unité de calcul destinée à être embarquée dans un véhicule automobile pour mettre en oeuvre le procédé selon l'invention.

Cette unité de calcul est caractérisée en ce qu'elle comprend :

a) un bloc d'entrées reliées à des capteurs adapté pour fournir des données sur la vitesse des roues, des couples moteurs appliqués sur les roues, des pressions de freinage, du rapport de boîte de vitesses engagé,

b) un bloc pour effectuer une dérivation discrète et un filtrage de la vitesse de chaque roue et fournir une estimation de l'accélération de chaque roue,

c) un bloc pour estimer la valeur du couple appliqué à chaque roue en tenant compte de la pression de freinage, du rapport de boîte de vitesses engagé et de l'état de l'embrayage,

d) un bloc pour effectuer une estimation de l'inertie des roues pour chacun des essieux avant et arrière du véhicule,

e) un bloc pour effectuer une transformation géométrique de l'estimation de l'accélération de chaque roue effectuée par le bloc,

f) un bloc pour effectuer l'estimation de la dérivée du glissement de chaque roue, à partir des valeurs estimées par les blocs.

De préférence, cette unité de calcul est utilisée pour contrôler un dispositif d'anti-blocage des freins et/ou un dispositif d'anti-patinage des roues et pour calculer une vitesse de référence ou un glissement, caractérisée en ce que les actionneurs du dispositif d'anti-blocage des freins et/ou dispositif d'anti-patinage sont commandés par une logique d'activation utilisant les valeurs de la dérivée du glissement de chaque roue estimée par le bloc.

D'autres particularités et avantages de l'invention apparaîtront encore tout au long de la description ci-après.

Au dessin annexé, donné à titre d'exemple non limitatif :

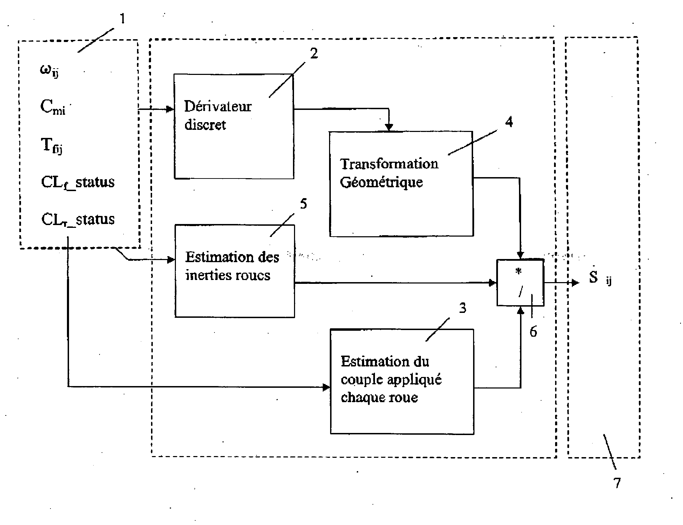

- la figure 1 est un schéma de l'unité de calcul pour la mise en oeuvre du procédé selon l'invention.

La figure 1 montre les différents blocs ou modules de l'unité de calcul utilisée pour la mise en oeuvre du procédé d'estimation du glissement des roues d'un véhicule automobile.

Cette unité comprend un bloc 1 d'entrées reliées à des capteurs adaptés pour fournir des donnés sur la vitesse des roues $\omega_{ij}$, des couples moteurs Cmi appliqués sur les roues, des pressions de freinage Tfi, du rapport de boîte de vitesses engagé CLf - status, CLr - status.

Ce bloc d'entrée 1 est relié directement à trois blocs 2, 3, 5.

Le bloc 2 effectue une dérivation discrète et un filtrage de la vitesse de chaque roue et fournit une estimation de l'accélération de chaque roue.

Le bloc 3 effectue une estimation de la valeur du couple appliqué à chaque roue en tenant compte de la pression de freinage, du rapport de boîte de vitesses engagé et de l'état de l'embrayage.

Le bloc 5 effectue une estimation de l'inertie des roues pour chacun des essieux avant et arrière du véhicule.

Le bloc 4 qui est relié au bloc 2 effectue une transformation géométrique de l'estimation de l'accélération de chaque roue effectuée par le bloc 2.

Le bloc 6 effectue l'estimation de la dérivée du glissement de chaque roue, à partir des valeurs estimées par les blocs 4, 5 et 3.

On détaillera ci-après les calculs effectués par chacun des blocs ci-dessus.

Dans ce qui suit, chacune des quatre roues du véhicule sera désignée par un couple d'indice ij selon la convention suivante :

i=f, j=l → roue avant gauche
i=f, j=r → roue avant droite
i=r, j=l → roue arrière gauche
i=r, j=r → roue arrière droite

On notera également Jij l'inertie équivalente à la roue, r le rayon de la roue, N le rapport de réduction globale, $\omega_{ij}$ la vitesse angulaire de la roue, $Tm_j$ le couple moteur sur les essieux du véhicule (i=f, r pour représenter le couple moteur à l'essieu avant (front) ou arrière (rear) du véhicule), $P_{ij}$ les pressions de frein à la roue (i=f, r et j=d, g pour représenter une roue droite ou gauche du véhicule), $F_{ij}$ les efforts extérieurs appliqués à la roue, M la masse du véhicule, et V la vitesse du véhicule.

Les signaux d'entrée du bloc 1, sont les suivants :

Les vitesses roues ($\omega_{ij}$)
Le(s) couple(s) moteur(s) sur les essieux du véhicule (Cmi)
Les pressions de freinage ($Tf_{ij}$)
Le(s) rapport(s) de boîte de vitesse(s) (CLf_status et CLr_status).

Dans le bloc 2 l'accélération de chaque roue est obtenue par dérivation discrète et filtrage de la vitesse de roue.

Dans le bloc 3 le couple moteur appliqué à chaque roue peut être obtenu à partir des informations issues des actionneurs ou par estimation.

Pour un actionneur électrique, le couple fourni est bien maîtrisé et peut être estimé grâce aux mesures de courant électrique et de régime moteur. Pour un moteur thermique une estimation du couple moteur donne une information sur le couple fourni avec un degré de précision moyen mais suffisant pour notre estimateur.

Ensuite le couple à chaque roue est calculé en prenant en considération le rapport de boîte ou l'état des embrayages (ou crabot) entre l'actionneur et les roues. Le différentiel est modélisé simplement dans cette invention mais il est envisageable d'améliorer le calcul du couple à la roue en utilisant un modèle de différentiel plus sophistiqué.

Dans la suite $Cm_{ij}$ représente le couple moteur à la roue (i=f, r pour représenter le couple moteur à l'essieu avant ou arrière du véhicule, j=r, l pour représenter une roue droite ou gauche du véhicule), $Pf_{ij}$ les pressions de frein à la roue (i, j décrit précédemment) et $Cf_{ij}$ les couples de frein correspondant.

Une illustration de l'invention consiste à calculer le couple à la roue grâce à l'expression suivante (différentiel parfait).

Pour le couple aux roues avant droit et gauche :

$$Cm_{fr} = 1/2 \ CLf\_status \times Tm_f$$

$$Cm_{fl} = 1/2 \ CLf\_status \times Tm_f$$

$$Cf_{fr} = Efficacite\_Avant \times P_{fr}$$

$$Cf_{fl} = Efficacite\_Avant \times P_{fl}$$

Pour le couple aux roues arrières droite et gauche :

$$Cm_{rd} = 1/2 \ CLr\_status \times Tm_r$$

$$Cm_{rg}=1/2 \; CLr\_status \times Tm_r$$

$$Cf_{rd}=\text{Efficacite\_Arrière} \times P_{rr}$$

$$Cf_{rg}=\text{Efficacite\_Arrière} \times P_{rl}$$

« Efficacité_Arrière et Efficacité-Avant » désignent les efficacités des freins (grandeur connue et identifiée par ailleurs) et Cli_status (i=f, r pour front, rear) le rapport engagé, cette valeur étant égale à 0, lorsque l'embrayage est ouvert.

Remarque :

Des variantes sont possibles pour améliorer l'estimation des couples moteurs et freins notamment pour :

- prendre en compte les variations de l'efficacité des freins à l'aide de techniques d'observations et
- mieux représenter le différentiel.

Le bloc 5 estime l'inertie des roues d'un même essieu, par exemple $J_{fi}$ pour l'essieu avant cette inertie est fonction de l'inertie moteur $J_{mot}$ et de l'inertie pont+roue $J_{pont}$ selon l'équation suivante :

$$J_{fi} = \frac{J_{pont} + CL_i\_status^2 \cdot J_{mot}}{2}$$

avec CLi_status (f, r pour front, rear) le rapport engagé (0 si l'embrayage est ouvert).

Le bloc 4 effectue une transformation géométrique.

Dans le contexte d'un véhicule à 2 ou 4 roues motrices, les équations suivantes sont vérifiées pour chaque roue du véhicule :

$$J_{ij} \cdot \frac{\delta \omega_{ij}}{\delta t} = Cm_{ij} - Cf_{ij} - rF_{ij} \quad \textbf{avec} \quad i=f,l \quad j=l,r \qquad (1)$$

$$M \cdot \frac{\delta V}{\delta t} = \sum_{i,j} F_{ij} - C_x v^2 \qquad (2)$$

On supposera que la contribution de la force aérodynamique ($- C_x V^2$) est négligeable dans le calcul de la dynamique de glissement. De ce fait le terme aérodynamique disparaît dans la suite du calcul.

On appelle Sxij le glissement de la roue ij défini de la façon suivante :

$$Sx_{ij} = r\omega_{ij} - V$$

En multipliant les deux termes de l'équation (2) par le rayon de la roue r et en sommant terme à terme l'équation ainsi obtenue avec l'équation (1) on obtient l'équation suivante :

$$r \cdot M \cdot \frac{\delta V}{\delta t} + \sum_{i,j} J_{ij} \cdot \frac{\delta \omega_{ij}}{\delta t} = \sum_{i,j} (Cm_{ij} - Cf_{ij}) \qquad (3)$$

En dérivant par rapport au temps t les deux termes de l'équation (3) on obtient :

$$\frac{\delta V}{\delta t} = r \frac{\delta \omega_{ij}}{\delta t} - \frac{\delta S x_{ij}}{\delta t} \qquad (4)$$

On peut maintenant remplacer le terme $\dfrac{\delta V}{\delta t}$ de l'équation (4) avec l'expression au second terme de l'équation (5) pour tout couple d'indice ij. On obtient ainsi les quatre équations suivantes pour les quatre roues.

$$\begin{cases} (J_{11} + M \cdot r^2)\dfrac{\delta \omega_{11}}{\delta t} - \dfrac{\delta S x_{11}}{\delta t} \cdot M \cdot r + \sum_{ij \neq 11} J_{ij} \cdot \dfrac{\delta \omega_{ij}}{\delta t} = \sum_{i,j}(Cm_{ij} - Cf_{ij}) \\[2ex] (J_{12} + M \cdot r^2)\dfrac{\delta \omega_{12}}{\delta t} - \dfrac{\delta S x_{12}}{\delta t} \cdot M \cdot r + \sum_{ij \neq 12} J_{ij} \cdot \dfrac{\delta \omega_{ij}}{\delta t} = \sum_{i,j}(Cm_{ij} - Cf_{ij}) \\[2ex] (J_{21} + M \cdot r^2)\dfrac{\delta \omega_{21}}{\delta t} - \dfrac{\delta S x_{21}}{\delta t} \cdot M \cdot r + \sum_{ij \neq 21} J_{ij} \cdot \dfrac{\delta \omega_{ij}}{\delta t} = \sum_{i,j}(Cm_{ij} - Cf_{ij}) \\[2ex] (J_{22} + M \cdot r^2)\dfrac{\delta \omega_{22}}{\delta t} - \dfrac{\delta S x_{22}}{\delta t} \cdot M \cdot r + \sum_{ij \neq 22} J_{ij} \cdot \dfrac{\delta \omega_{ij}}{\delta t} = \sum_{i,j}(Cm_{ij} - Cf_{ij}) \end{cases}$$

L'estimation de la dérivée du glissement pour chacune des quatre roues est alors donnée par :

$$\begin{cases} \dfrac{\delta S x_{11}}{\delta t} = \left[ (J_{11} + M \cdot r^2)\dfrac{\delta \omega_{11}}{\delta t} + \sum_{ij \neq 11} J_{ij} \cdot \dfrac{\delta \omega_{ij}}{\delta t} - \sum_{i,j}(Cm_{ij} - Cf_{ij}) \right]\dfrac{1}{M \cdot r} \\[2ex] \dfrac{\delta S x_{12}}{\delta t} = \left[ (J_{12} + M \cdot r^2)\dfrac{\delta \omega_{12}}{\delta t} + \sum_{ij \neq 12} J_{ij} \cdot \dfrac{\delta \omega_{ij}}{\delta t} - \sum_{i,j}(Cm_{ij} - Cf_{ij}) \right]\dfrac{1}{M \cdot r} \\[2ex] \dfrac{\delta S x_{21}}{\delta t} = \left[ (J_{21} + M \cdot r^2)\dfrac{\delta \omega_{21}}{\delta t} + \sum_{ij \neq 21} J_{ij} \cdot \dfrac{\delta \omega_{ij}}{\delta t} - \sum_{i,j}(Cm_{ij} - Cf_{ij}) \right]\dfrac{1}{M \cdot r} \\[2ex] \dfrac{\delta S x_{22}}{\delta t} = \left[ (J_{22} + M \cdot r^2)\dfrac{\delta \omega_{22}}{\delta t} + \sum_{ij \neq 22} J_{ij} \cdot \dfrac{\delta \omega_{ij}}{\delta t} - \sum_{i,j}(Cm_{ij} - Cf_{ij}) \right]\dfrac{1}{M \cdot r} \end{cases}$$

On note dans cette expression que le calcul de la dérivée du glissement est exact, différente pour une roue droite et une roue gauche et ne dépend plus des efforts extérieurs.

La sortie du, système (bloc 7) est notée $\dfrac{\partial S_{x_{ij}}}{\partial t} = \dot{S}x_{ij}$ ce qui représente l'estimation de la dérivée du glissement.

Les essais ont montré qu'il existait un écart très faible entre la valeur calculée de la dérivée du glissement et la valeur réelle de cette dérivée.

Ainsi, l'unité de calcul selon l'invention peut être utilisée pour contrôler de façon très précise notamment un dispositif d'anti-blocage des roues et/ou un dispositif d'anti-patinage des roues d'un véhicule automobile.

## Revendications

1. Procédé pour estimer la dérivée du glissement des roues d'un véhicule automobile équipé de deux ou quatre roues motrices et d'une unité de calcul pour mettre en oeuvre ce procédé comprenant les étapes suivantes :

   a) la saisie de données sur la vitesse des roues, des couples moteurs appliqués sur les roues, des pressions de freinage, du rapport de boîte de vitesses engagé,
   b) l'estimation de l'accélération de chaque roue en effectuant une dérivation discrète et un filtrage de la vitesse de chaque roue, ce procédé étant **caractérisé par** les étapes suivantes:
   c) l'estimation du couple appliqué chaque roue en tenant compte, de la pression de freinage, du rapport de boîte de vitesses engagé et de l'état de l'embrayage,
   d) l'estimation de l'inertie des roues pour chacun des essieux avant et arrière du véhicule,
   e) la mise en oeuvre d'une transformation géométrique de l'estimation de l'accélération de chaque roue estimée en b),
   f) l'estimation de la dérivée du glissement de chaque roue, à partir des valeurs estimées en c), d) et e).

2. Procédé selon la revendication 1, **caractérisé en ce que** l'estimation du couple appliqué Cm sur chaque roue est effectuée à l'aide de la relation suivante :

$$Cm = \tfrac{1}{2}\ CL\ status \times Tm$$

CL status étant le rapport de démultiplication du rapport de boîte de vitesses engagé, ce rapport étant égal à 0, lorsque l'embrayage est ouvert et Tm est le régime du moteur, et **en ce que** l'estimation du couple de freinage Cf appliqué sur chaque roue est effectuée à l'aide de la relation suivante :

$$Cf = Efficacité \times Pr$$

Pr étant la pression de freinage appliquée sur la roue.

3. Procédé selon l'une des revendications 1 ou 2, **caractérisé en ce que** l'estimation de l'inertie de chaque essieu est effectuée à l'aide de la relation suivante :

$$J = \frac{J_{pont} + CL\ status\ 2\ J_{mot}}{2}$$

J pont étant l'inertie du pont plus l'inertie de la roue et J mot l'inertie du moteur et CL status le rapport de démultiplication du rapport de boîte de vitesses engagé, ce rapport étant égal à 0 lorsque l'embrayage est ouvert.

4. Procédé selon l'une des revendications 1 à 3, la transformation géométrique selon l'étape e) est effectuée à l'aide des équations suivantes, pour les quatre roues du véhicule :

$$\begin{cases} (J_{11} + M \cdot r^2)\dfrac{\delta\omega_{11}}{\delta t} - \dfrac{\delta Sx_{11}}{\delta t} \cdot M \cdot r + \sum_{ij \neq 11} J_{ij} \cdot \dfrac{\delta\omega_{ij}}{\delta t} = \sum_{i,j}(Cm_{ij} - Cf_{ij}) \\[3mm] (J_{12} + M \cdot r^2)\dfrac{\delta\omega_{12}}{\delta t} - \dfrac{\delta Sx_{12}}{\delta t} \cdot M \cdot r + \sum_{ij \neq 12} J_{ij} \cdot \dfrac{\delta\omega_{ij}}{\delta t} = \sum_{i,j}(Cm_{ij} - Cf_{ij}) \\[3mm] (J_{21} + M \cdot r^2)\dfrac{\delta\omega_{21}}{\delta t} - \dfrac{\delta Sx_{21}}{\delta t} \cdot M \cdot r + \sum_{ij \neq 21} J_{ij} \cdot \dfrac{\delta\omega_{ij}}{\delta t} = \sum_{i,j}(Cm_{ij} - Cf_{ij}) \\[3mm] (J_{22} + M \cdot r^2)\dfrac{\delta\omega_{22}}{\delta t} - \dfrac{\delta Sx_{22}}{\delta t} \cdot M \cdot r + \sum_{ij \neq 22} J_{ij} \cdot \dfrac{\delta\omega_{ij}}{\delta t} = \sum_{i,j}(Cm_{ij} - Cf_{ij}) \end{cases}$$

les indices 11 et 12 désignant respectivement la roue avant droite et la roue avant gauche et les indices 21 et 22 la roue arrière droite et la roue arrière gauche,

Sx11, Sx12, Sx21, Sx22 désignant le glissement des roues qui est égal à : $Sx_{ij} \, r\omega_{ij}$ - V (avec ij = 11, 12, 21, 22) r étant le rayon de la roue, $\omega_{ij}$ la vitesse de la roue et V la vitesse du véhicule et, M la masse du véhicule et t le temps.

**5.** Procédé selon la revendication 4, **caractérisé en ce que** la dérivée du glissement de chacune des quatre roues du véhicule est calculée à l'aide des équations suivantes :

$$\begin{cases} \dfrac{\delta Sx_{11}}{\delta t} = \left[ (J_{11} + M \cdot r^2)\dfrac{\delta\omega_{11}}{\delta t} + \sum_{ij \neq 11} J_{ij} \cdot \dfrac{\delta\omega_{ij}}{\delta t} - \sum_{i,j}(Cm_{ij} - Cf_{ij}) \right]\dfrac{1}{M \cdot r} \\[3mm] \dfrac{\delta Sx_{12}}{\delta t} = \left[ (J_{12} + M \cdot r^2)\dfrac{\delta\omega_{12}}{\delta t} + \sum_{ij \neq 12} J_{ij} \cdot \dfrac{\delta\omega_{ij}}{\delta t} - \sum_{i,j}(Cm_{ij} - Cf_{ij}) \right]\dfrac{1}{M \cdot r} \\[3mm] \dfrac{\delta Sx_{21}}{\delta t} = \left[ (J_{21} + M \cdot r^2)\dfrac{\delta\omega_{21}}{\delta t} + \sum_{ij \neq 21} J_{ij} \cdot \dfrac{\delta\omega_{ij}}{\delta t} - \sum_{i,j}(Cm_{ij} - Cf_{ij}) \right]\dfrac{1}{M \cdot r} \\[3mm] \dfrac{\delta Sx_{22}}{\delta t} = \left[ (J_{22} + M \cdot r^2)\dfrac{\delta\omega_{22}}{\delta t} + \sum_{ij \neq 22} J_{ij} \cdot \dfrac{\delta\omega_{ij}}{\delta t} - \sum_{i,j}(Cm_{ij} - Cf_{ij}) \right]\dfrac{1}{M \cdot r} \end{cases}$$

**6.** Unité de calcul destinée à être embarquée dans un véhicule automobile pour mettre en oeuvre le procédé selon l'une des revendications 1 à 5, comprenant:

a) un bloc (1) d'entrées reliées à des capteurs adaptés pour fournir des données sur la vitesse des roues, des couples moteurs appliqués sur les roues, des pressions de freinage, du rapport de boîte de vitesses engagé,
b) un bloc (2) pour effectuer une dérivation discrète et un filtrage de la vitesse de chaque roue et fournir une estimation de l'accélération de chaque roue, ladite unité étant **caractérisée en ce qu'**elle comprend:
c) un bloc (3) pour estimer la valeur du couple appliqué à chaque roue en tenant compte de la pression de freinage, du rapport de boîte de vitesses engagé et de l'état de l'embrayage,
d) un bloc (5) pour effectuer une estimation de l'inertie des roues pour chacun des essieux avant et arrière du véhicule,
e) un bloc (4) pour effectuer une transformation géométrique de l'estimation de l'accélération de chaque roue effectuée par le bloc (2),
f) un bloc (6) pour effectuer l'estimation de la dérivée du glissement de chaque roue, à partir des valeurs estimées par les blocs (3), (5) et (4).

**7.** Unité de calcul selon la revendication 6, utilisée pour contrôler un dispositif d'anti-blocage des freins et/ou un dispositif d'anti-patinage des roues et pour calculer une vitesse de référence ou un glissement, **caractérisée en ce que** les actionneurs du dispositif d'anti-blocage des freins et/ou dispositif d'anti-patinage sont commandés par une logique d'activation utilisant les valeurs de la dérivée du glissement de chaque roue estimée par le bloc (6).

**Claims**

1. Method for estimating the derivative of the wheel slippage of a motor vehicle equipped with two or four drive wheels and a computing unit for implementing this method, comprising the following steps:

   a) the input of data concerning the speed of the wheels, engine torque supplied to the wheels, braking pressures, the engaged gearbox ratio,
   b) the estimation of the acceleration of each wheel by performing a discrete derivation and a filtering of the speed of each wheel,
   this method being **characterized by** the following steps:
   c) the estimation of the torque applied to each wheel, taking into account the braking pressure, the engaged gearbox ratio and the state of the clutch,
   d) the estimation of the inertia of the wheels for each of the front and rear axles of the vehicle,
   e) the implementation of a geometrical transformation of the estimation of the acceleration of each wheel estimated in b),
   f) the estimation of the derivative of the slippage of each wheel, based on the values estimated in c), d) and e).

2. Method according to Claim 1, **characterized in that** the estimation of the torque Cm applied to each wheel is performed using the following relation:

$$Cm = \frac{1}{2}\ CL\ status \times Tm$$

   CL status being the gear ratio of the engaged gearbox ratio, this ratio being equal to 0 when the clutch is open and Tm is the speed of the engine, and **in that** the estimation of the braking torque Cf applied to each wheel is performed using the following relation:

$$Cf = efficiency \times Pr$$

   Pr being the braking pressure applied to the wheel.

3. Method according to either of Claims 1 and 2, **characterized in that** the estimation of the inertia of each axle is performed using the following relation:

$$J = \frac{J_{powered\ axle} + CL\ status\ 2\ J_{engine}}{2}$$

   J powered axle being the inertia of the powered axle plus the inertia of the wheel and J engine being the inertia of the engine and CL status the gear ratio of the engaged gearbox ratio, this ratio being equal to 0 when the clutch is open.

4. Method according to one of Claims 1 to 3, the geometrical transformation according to step e) is performed using the following equations, for the four wheels of the vehicle:

$$
\begin{cases}
(J_{11} + M \cdot r^2)\dfrac{\delta\omega_{11}}{\delta t} - \dfrac{\delta Sx_{11}}{\delta t} \cdot M \cdot r + \sum_{ij \neq 11} J_{ij} \cdot \dfrac{\delta\omega_{ij}}{\delta t} = \sum_{i,j}(Cm_{ij} - Cf_{ij}) \\[3ex]
(J_{12} + M \cdot r^2)\dfrac{\delta\omega_{12}}{\delta t} - \dfrac{\delta Sx_{12}}{\delta t} \cdot M \cdot r + \sum_{ij \neq 12} J_{ij} \cdot \dfrac{\delta\omega_{ij}}{\delta t} = \sum_{i,j}(Cm_{ij} - Cf_{ij}) \\[3ex]
(J_{21} + M \cdot r^2)\dfrac{\delta\omega_{21}}{\delta t} - \dfrac{\delta Sx_{21}}{\delta t} \cdot M \cdot r + \sum_{ij \neq 21} J_{ij} \cdot \dfrac{\delta\omega_{ij}}{\delta t} = \sum_{i,j}(Cm_{ij} - Cf_{ij}) \\[3ex]
(J_{22} + M \cdot r^2)\dfrac{\delta\omega_{22}}{\delta t} - \dfrac{\delta Sx_{22}}{\delta t} \cdot M \cdot r + \sum_{ij \neq 22} J_{ij} \cdot \dfrac{\delta\omega_{ij}}{\delta t} = \sum_{i,j}(Cm_{ij} - Cf_{ij})
\end{cases}
$$

the indices 11 and 12 respectively designating the front right wheel and the front left wheel and the indices 21 and 22 the rear right wheel and the rear left wheel,

$Sx11$, $Sx12$, $Sx21$, $Sx22$ designating the slippage of the wheels which is equal to: $Sx_{ij} = r\omega_{ij} - V$ (with ij = 11, 12, 21, 22), r being the radius of the wheel, $\omega_{ij}$ the speed of the wheel and V the speed of the vehicle, and M the weight of the vehicle and t the time.

**5.** Method according to Claim 4, **characterized in that** the derivative of the slippage of each of the four wheels of the vehicle is calculated using the following equations:

$$
\begin{cases}
\dfrac{\delta Sx_{11}}{\delta t} = \left[ (J_{11} + M \cdot r^2)\dfrac{\delta\omega_{11}}{\delta t} + \sum_{ij \neq 11} J_{ij} \cdot \dfrac{\delta\omega_{ij}}{\delta t} - \sum_{i,j}(Cm_{ij} - Cf_{ij}) \right]\dfrac{1}{M \cdot r} \\[3ex]
\dfrac{\delta Sx_{12}}{\delta t} = \left[ (J_{12} + M \cdot r^2)\dfrac{\delta\omega_{12}}{\delta t} + \sum_{ij \neq 12} J_{ij} \cdot \dfrac{\delta\omega_{ij}}{\delta t} - \sum_{i,j}(Cm_{ij} - Cf_{ij}) \right]\dfrac{1}{M \cdot r} \\[3ex]
\dfrac{\delta Sx_{21}}{\delta t} = \left[ (J_{21} + M \cdot r^2)\dfrac{\delta\omega_{21}}{\delta t} + \sum_{ij \neq 21} J_{ij} \cdot \dfrac{\delta\omega_{ij}}{\delta t} - \sum_{i,j}(Cm_{ij} - Cf_{ij}) \right]\dfrac{1}{M \cdot r} \\[3ex]
\dfrac{\delta Sx_{22}}{\delta t} = \left[ (J_{22} + M \cdot r^2)\dfrac{\delta\omega_{22}}{\delta t} + \sum_{ij \neq 22} J_{ij} \cdot \dfrac{\delta\omega_{ij}}{\delta t} - \sum_{i,j}(Cm_{ij} - Cf_{ij}) \right]\dfrac{1}{M \cdot r}
\end{cases}
$$

**6.** Computing unit intended to be fitted in a motor vehicle to implement the method according to one of Claims 1 to 5, comprising:

a) a block (1) of inputs linked to appropriate sensors for supplying data on the speed of the wheels, the engine torques applied to the wheels, the braking pressures, the engaged gearbox ratio,

b) a block (2) for performing a discrete derivation and a filtering of the speed of each wheel and supplying an estimation of the acceleration of each wheel,

said unit being **characterized in that** it comprises:

c) a block (3) for estimating the value of the torque applied to each wheel, taking into account the braking pressure, the engaged gearbox ratio and the state of the clutch,

d) a block (5) for performing an estimation of the inertia of the wheels for each of the front and rear axles of the vehicle,

e) a block (4) for performing a geometrical transformation of the estimation of the acceleration of each wheel performed by the block (2),

f) a block (6) for performing the estimation of the derivative of the slippage of each wheel, based on the values estimated by the blocks (3), (5) and (4) .

7. Computing unit according to Claim 6, used to control an anti-lock device for the brakes and/or an anti-skid device for the wheels and for calculating a reference speed or a slippage, **characterized in that** the actuators of the anti-lock device for the brakes and/or anti-skid device are controlled by an activation logic using the values of the derivative of the slippage of each wheel estimated by the block (6).

**Patentansprüche**

1. Verfahren zum Schätzen der Ableitung des Schlupfs der Räder eines Kraftfahrzeugs, das mit zwei oder vier Antriebsrädern und mit einer Recheneinheit zur Durchführung dieses Verfahrens ausgestattet ist, welches die folgenden Schritte enthält:

   a) Erfassen von Daten über die Geschwindigkeit der Räder, der an die Räder angewendeten Antriebsmomente, der Bremsdrücke, des eingelegten Getriebegangs,
   b) Schätzen der Beschleunigung jedes Rads, indem eine diskrete Ableitung und eine Filterung der Geschwindigkeit jedes Rads durchgeführt wird,
   wobei dieses Verfahren durch die folgenden Schritte **gekennzeichnet** ist:
   c) Schätzen des an jedes Rads angewendeten Drehmoments unter Berücksichtigung des Bremsdrucks, des eingelegten Getriebegangs und des Zustands der Kupplung,
   d) Schätzen der Trägheit der Räder für jede der Vorder- und Hinterachsen des Fahrzeugs,
   e) Durchführen einer geometrischen Umwandlung der Schätzung der in b) geschätzten Beschleunigung jedes Rads,
   f) Schätzen der Ableitung des Schlupfs jedes Rads ausgehend von den in c), d) und e) geschätzten Werten.

2. Verfahren nach Anspruch 1, **dadurch gekennzeichnet, dass** die Schätzung des an jedes Rad angewendeten Drehmoments Cm mit Hilfe der folgenden Beziehung durchgeführt wird:

$$\texttt{Cm = ½ CL Status x Tm}$$

wobei CL Status das Übersetzungsverhältnis des eingelegten Getriebegangs ist, wobei dieses Verhältnis gleich 0 ist, wenn die Kupplung offen ist, und Tm die Drehzahl des Motors ist, und dass die Schätzung des an jedes Rad angewendeten Bremsmoments Cf mit Hilfe der folgenden Beziehung durchgeführt wird:

$$\texttt{Cf =: Wirksamkeit x Pr}$$

wobei Pr der auf das Rad angewendete Bremsdruck ist.

3. Verfahren nach einem der Ansprüche 1 oder 2, **dadurch gekennzeichnet, dass** die Schätzung der Trägheit jeder Achse mit Hilfe der folgenden Beziehung durchgeführt wird:

$$J = \frac{J_{\text{Achsantrieb}} + \text{CL Status 2 } J_{\text{Mot}}}{2}$$

wobei J Achsantrieb die Trägheit des Achsantriebs plus die Trägheit des Rads und J Mot die Trägheit des Motors und CL Status das Übersetzungsverhältnis des eingelegten Getriebegangs ist, wobei dieses Verhältnis gleich 0 ist, wenn die Kupplung offen ist.

4. Verfahren nach einem der Ansprüche 1 bis 3, wobei die geometrische Umwandlung gemäß dem Schritt e) mit Hilfe der folgenden Gleichungen für die vier Räder des Fahrzeugs durchgeführt wird:

$$\begin{cases}
(J_{11} + M \cdot r^2)\dfrac{\delta\omega_{11}}{\delta t} - \dfrac{\delta Sx_{11}}{\delta t} \cdot M \cdot r + \sum_{ij \neq 11} J_{ij} \cdot \dfrac{\delta\omega_{ij}}{\delta t} = \sum_{i,j}(Cm_{ij} - Cf_{ij}) \\[2ex]
(J_{12} + M \cdot r^2)\dfrac{\delta\omega_{12}}{\delta t} - \dfrac{\delta Sx_{12}}{\delta t} \cdot M \cdot r + \sum_{ij \neq 12} J_{ij} \cdot \dfrac{\delta\omega_{ij}}{\delta t} = \sum_{i,j}(Cm_{ij} - Cf_{ij}) \\[2ex]
(J_{21} + M \cdot r^2)\dfrac{\delta\omega_{21}}{\delta t} - \dfrac{\delta Sx_{21}}{\delta t} \cdot M \cdot r + \sum_{ij \neq 21} J_{ij} \cdot \dfrac{\delta\omega_{ij}}{\delta t} = \sum_{i,j}(Cm_{ij} - Cf_{ij}) \\[2ex]
(J_{22} + M \cdot r^2)\dfrac{\delta\omega_{22}}{\delta t} - \dfrac{\delta Sx_{22}}{\delta t} \cdot M \cdot r + \sum_{ij \neq 22} J_{ij} \cdot \dfrac{\delta\omega_{ij}}{\delta t} = \sum_{i,j}(Cm_{ij} - Cf_{ij})
\end{cases}$$

wobei die Indizes 11 und 12 das rechte Vorderrad bzw. das linke Vorderrad und die Indizes 21 und 22 das rechte Hinterrad bzw. das linke Hinterrad bezeichnen,

wobei Sx11, Sx12, Sx21, Sx22 den Schlupf der Räder bezeichnen, der gleich: $SX_{ij} = r\omega_{ij}\,V$ (mit ij = 11, 12, 21, 22) ist, wobei r der Radius des Rads, $\omega_{ij}$ die Geschwindigkeit des Rads und V die Geschwindigkeit des Fahrzeugs, und M die Masse des Fahrzeugs und t die Zeit ist.

5. Verfahren nach Anspruch 4, **dadurch gekennzeichnet, dass** die Ableitung des Schlupfs jedes der vier Räder des Fahrzeugs mit Hilfe der folgenden Gleichungen berechnet wird:

$$\begin{cases}
\dfrac{\delta Sx_{11}}{\delta t} = \left[(J_{11} + M \cdot r^2)\dfrac{\delta\omega_{11}}{\delta t} + \sum_{ij \neq 11} J_{ij} \cdot \dfrac{\delta\omega_{ij}}{\delta t} - \sum_{i,j}(Cm_{ij} - Cf_{ij})\right]\dfrac{1}{M \cdot r} \\[2ex]
\dfrac{\delta Sx_{12}}{\delta t} = \left[(J_{12} + M \cdot r^2)\dfrac{\delta\omega_{12}}{\delta t} + \sum_{ij \neq 12} J_{ij} \cdot \dfrac{\delta\omega_{ij}}{\delta t} - \sum_{i,j}(Cm_{ij} - Cf_{ij})\right]\dfrac{1}{M \cdot r} \\[2ex]
\dfrac{\delta Sx_{21}}{\delta t} = \left[(J_{21} + M \cdot r^2)\dfrac{\delta\omega_{21}}{\delta t} + \sum_{ij \neq 21} J_{ij} \cdot \dfrac{\delta\omega_{ij}}{\delta t} - \sum_{i,j}(Cm_{ij} - Cf_{ij})\right]\dfrac{1}{M \cdot r} \\[2ex]
\dfrac{\delta Sx_{22}}{\delta t} = \left[(J_{22} + M \cdot r^2)\dfrac{\delta\omega_{22}}{\delta t} + \sum_{ij \neq 22} J_{ij} \cdot \dfrac{\delta\omega_{ij}}{\delta t} - \sum_{i,j}(Cm_{ij} - Cf_{ij})\right]\dfrac{1}{M \cdot r}
\end{cases}$$

6. Recheneinheit, die dazu bestimmt ist, in ein Kraftfahrzeug eingebaut zu werden, um das Verfahren nach einem der Ansprüche 1 bis 5 durchzuführen, die enthält:

  a) einen Block (1) von Eingängen, die mit Sensoren verbunden sind, welche geeignet sind, um Daten über die Geschwindigkeit der Räder, der an die Räder angewendeten Antriebsmomente, der Bremsdrücke, des eingelegten Getriebegangs zu liefern,
  b) einen Block (2), um eine diskrete Ableitung und eine Filterung der Geschwindigkeit jedes Rads durchzuführen und eine Schätzung der Beschleunigung jedes Rads zu liefern,
  wobei die Einheit **dadurch gekennzeichnet ist, dass** sie enthält
  c) einen Block (3) zum Schätzen des Werts des an jedes Rad angewendeten Drehmoments unter Berücksichtigung des Bremsdrucks, des eingelegten Getriebegangs und des Zustands der Kupplung,
  d) einen Block (5), um eine Schätzung der Trägheit der Räder für jede der Vorder- und Hinterachsen des Fahrzeugs durchzuführen,
  e) einen Block (4), um eine geometrische Umwandlung der Schätzung der Beschleunigung jedes Rads durchzuführen, die vom Block (2) durchgeführt wird,
  f) einen Block (6), um die Schätzung der Ableitung des Schlupfs jedes Rads ausgehend von den durch die Blöcke (3), (5) und (4) geschätzten Werten durchzuführen.

7. Recheneinheit nach Anspruch 6, die verwendet wird, um eine Antiblockiervorrichtung der Bremsen und/oder eine Antischlupfvorrichtung der Räder zu überwachen und um eine Bezugsgeschwindigkeit oder einen Schlupf zu berechnen, **dadurch gekennzeichnet, dass** die Stellantriebe der Antiblockiervorrichtung der Bremsen und/oder der Antischlupfvorrichtung der Räder von einer Aktivierungslogik gesteuert werden, die die Werte der Ableitung des Schlupfs jedes Rads verwenden, die vom Block (6) geschätzt wird.

**EP 1 996 437 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 59109450 B
- FR 2415030
- US 5046787 A
- US 2005234628 A